# EUROPEAN PATENT SPECIFICATION

(11) **EP 4 530 199 B1**
(45) Date of publication and mention of the grant of the patent: **04.03.2026**
(21) Application number: 23382984.5
(22) Date of filing: 27.09.2023
(51) Int. Cl.: B64D 37/32, B65D 90/44, A62C 3/08, A62C 99/00

(54) **INERTING SYSTEM FOR AN AIRCRAFT**
INERTISIERUNGSSYSTEM FÜR EIN FLUGZEUG
SYSTÈME D'INERTAGE POUR UN AÉRONEF

(43) Date of publication of application: 02.04.2025
(73) Proprietor: Airbus Operations, S.L.U., 28906 Getafe (Madrid) (ES)
(72) Inventor: MARCOS IZQUIERDO, Juan Luis, 28906 Getafe - Madrid (ES)
(74) Representative: ABG Intellectual Property Law, S.L.

(56) References cited:
- US-A- 3 948 626
- US-A1- 2023 027 471

## Description

### TECHNICAL FIELD OF THE INVENTION

The present invention relates to an inerting system for an aircraft and a method of inerting a hydrogen systems, and in particular to an improved inerting system that reuses the inert gas already supplied to the hydrogen system through a fluid recirculation system.

### BACKGROUND OF THE INVENTION

It is well-known to those skilled in the art to inert explosive or flammable atmospheres on-board an aircraft with inert gas (such as nitrogen) , such as for example fuel tanks or fuel cells, by providing inert gas to the inside of the casings housing the hydrogen-based systems. The hydrogen is a gas with a very high permeability which makes it difficult to contain it inside their working interfaces or volumes. This inerting is performed in order to avoid risks of explosion or flames in the casing housing fuel tanks or fuel cells. It is common to use nitrogen as inerting gas, the inert gas being then provided through nitrogen bottles or nitrogen generation system. The nitrogen circulates in the fuel tank or fuel cell casing at a nominal rate, determined based on a worst case scenario (ie with the maximum anticipated leakages). This sizing is made to ensure that the limits of a flammable mixture of hydrogen and oxygen in volumetric concentration are never reached in this atmosphere. The mix of the atmosphere inside the fuel tank or fuel cell casing is then expelled to the outside of the aircraft. The concentration of hydrogen and oxygen in this atmosphere is maintaiend many times below the required safety policy limits regarding fire extinguishing.

The arrangement of these nitrogen bottles or nitrogen generation system take up space on the aircraft for their installation, and also represent weight on-board the aircraft.

In addition, the known hydrogen-based systems casings are provided with a bottle of halon for discharging the halon in case of a fire inside the casing. However, halon as an extinguishing agent is configured for large volumes, whereas hydrogen-based system casings involve smaller volumes. Moreover, the use of halon as an extinguishing agent is starting to be disregarded for environmental reasons.

Document US 2023/027471 A1 discloses an inerting system for a hydrogen tank assembly.

The present invention seeks to ameliorate the problems mentioned above and others by improving the inerting of fuel tanks and fuel cell casing. In addition, there is also a need to find a substitute to fight afire in the event that it originates inside the casing of fuel tanks or fuel cells.

### SUMMARY OF THE INVENTION

The present invention provides a solution for the aforementioned problems, by an inerting system according to claim 1, an aircraft according to claim 11 and a method for inerting a hydrogen system according to claim 12. In dependent claims, preferred embodiments of the invention are defined.

In a first inventive aspect, the present invention provides an inerting system for an aircraft, the inerting system comprising:
- a casing at least partially housing a hydrogen system, the casing comprising at least one inlet and a first outlet, the first outlet being configured to connect the inside of the casing with the outside of the aircraft;
- pure inert gas supplying means configured to supply pure inert gas to the inside of the casing through an inlet conduct connected to the inert gas supplying means and to the at least one inlet of the casing;
- sensing means configured to measure the concentration of oxygen and the concentration of hydrogen of a fluid located inside the casing;
- inert fluid regulating means configured to regulate the passage of a flow of pure inert gas inside of the casing through the inlet conduct;
- an outlet valve configured to regulate an outlet flow of fluid located inside the casing through the first outlet;
- a fluid recirculation system configured to recirculate part of the fluid located inside the casing to the inlet conduct for supplying the recirculated fluid mixed with the pure inert gas to the inside of the casing; and
- control means in data communication with the sensing means and configured to independently control at least the outlet valve and the fluid recirculation system based on the concentration of oxygen and the concentration of hydrogen inside the casing;
wherein the control means is configured to actuate the recirculation in the fluid recirculation system only when the concentration of oxygen and/or the concentration of hydrogen of the fluid located inside the casing are below first pre-set thresholds respectively.

The present inerting system is provided for inerting hydrogen systems (or hydrogen-based systems) of aircrafts such as fuel tanks or fuel cell casings wherein the fuel is hydrogen. The inerting system will be suitable for inerting any enclosure that has a relatively small free volume and that needs to be inerted in an aircraft. In an embodiment, the hydrogen system is a fuel tank or a fuel cell.

The inerting system comprises a casing that at least partially houses or encloses a hydrogen system. Casing means an enclosure which houses a hydrogen system or part of a hydrogen system. This casing is used to contain a potential leak of hydrogen so that it does not extend outside the casing. The casing comprises at least one inlet for allowing at least an inert gas to be fed to the casing. Additionally, the casing that it is inerted has a vent line to purge the atmosphere, and this vent line usually connects to the outside of the aircraft.

In the atmosphere inside the casing the oxygen concentration and the hydrogen concentration shall not be respectively higher than limits defined for safety reasons. In particular, oxygen shall not overpass 4% of volumetric concentration and hydrogen shall not overpass 4% of volumetric concentration.

The at least one inlet is adapted in relation to its position, shape, direction, etc. to obtain as turbulent a flow as possible inside the casing in order to avoid local oxygen and hydrogen accumulation.

The hydrogen system such as the fuel cell needs hydrogen and an air supply (containing oxygen) to work. Inside the casing, where the fuel cell is installed, are placed air supply pipes and hydrogen supply pipes. These pipes have nominal leakages and the inerting system is sized taking into consideration the worst case scenario of nominal leakages. The connectors of these hydrogen supply pipes and the fuel cells are the main sources of the leakages.

For inerting the inside of the casing, the inerting system comprises supplying means for dispensing pure inert gas to the inside of the casing through the inlet by means of an inlet conduct. This inlet conduct connects the pure inert gas supplying means with the inlet of the casing. There is inert fluid regulating means for regulating the passage of a flow of pure inert gas through the inlet conduct to the inside of the casing.

In an embodiment, the inert fluid regulating means comprise an inlet valve for regulating the flow of pure inert gas through the inlet conduct to be supplied to the inside of the casing. In another embodiment, the inert fluid regulating means comprise an orifice with a predefined diameter that always allows the same flow rate to pass through.

In an embodiment, the pure inert gas that is supplied by the supplying means is nitrogen.

In an embodiment, the casing comprises a plurality of inlets (a flow distributor) connected to the inlet conduct, so that the inert pure gas supply to the inside of the casing is carried out through all of these inlets. The plurality of inlets reduces local build-up of oxygen and/or hydrogen inside the casing, as it allows to obtain a good mixing of the atmosphere in the casing in different areas of the same, and in some cases turbulent flows in the casing to obtain an even better fluid mixing.

The inerting system further comprises sensing means for measuring the concentration of oxygen and hydrogen of the atmosphere or fluid housed in the casing. The fluid located inside the casing is understood as a gas fluid such as a pure gas or a gas mix. These concentrations of oxygen and hydrogen refer to the volumetric concentration inside the casing and are expressed as a percentage.

The inerting system also comprises an outlet valve for regulating the exhaust of fluid located inside the casing through the first outlet of the casing. This outlet valve even in its closest position has a minimal aperture that lets pass a flow for exhausting the casing.

Furthermore, the inerting system comprises a fluid recirculation system adapted to partially recirculate fluid located inside the casing through the inerting system. Part of the fluid located in the casing is recirculated to the inlet conduct in order to be supplied back into the casing but mixed with pure inert gas in such a way that the inside of the casing is kept inert.

The inerting system also comprises control means connected to the sensing means so that according to the data provided by the sensing means, regarding the oxygen and hydrogen concentrations, the control means controls each of the inlet valve, outlet valve and fluid recirculation system separately as needed. That is, if the oxygen and/or hydrogen concentration conditions are suitable, part of the fluid of the casing is recirculated by extracting it from the casing and re-injecting it but mixed with pure inert gas supplied by the pure inert gas supplying means. The oxygen and/or hydrogen concentrations are considered suitable for allowing the recirculation of part of the fluid housed in the casing when they are below a first pre-set threshold respectively. Therefore, the control means actuate the recirculation only when the concentration of oxygen and/or the concentration of hydrogen of the fluid of the casing are below such first pre-set thresholds. Specifically, the term "to actuate" is understood as to recirculate part of the fluid located inside the casing towards the inlet conduct.

Depending on the hydrogen concentration and/or oxygen concentration, the fluid recirculation system recirculates more or less mass flow of fluid from the casing. If the concentration of hydrogen and the concentration of oxygen of the fluid to be recirculated are below first pre-set thresholds, more mass flow of fluid from casing is recirculated and less pure inert gas is needed. Whereas if only the concentration of hydrogen or the concentration of oxygen of the fluid to be recirculated is below the corresponding first pre-set threshold, less fluid from the casing is recirculated and more pure inert gas is needed.

These first pre-set thresholds are based on the safety policy, so that if the concentration of oxygen and/or the concentration of hydrogen are sufficiently far away from the limits considered by the safety policy, the gas atmosphere located inside the casing will be partially recirculated.

In addition, the control means are also configured to control at least the regulation of the first outlet valve based on the measured concentration of oxygen and hydrogen. In an embodiment, the control means are also configured to control the regulation of the inlet valve.

The inerting system is therefore provided for inerting the volume around a hydrogen system or part of the hydrogen system in a controlled manner to prevent the occurrence of a fire or the creation of a flammable atmosphere in an undesired area of said volume.

Advantageously, the present inerting system requires less installation space in the aircraft as it reduces the amountof pure inert gas needed for inerting by providing the possibility of partially recirculating the fluid located inside the casing. In addition, this reduction in the pure inert gas supplying means (bottles or generation system) in turn reduces the weight for the aircraft.

By means of the sensing means and the control means the inerting system advantageously allows to measure and monitor the concentration of both hydrogen and oxygen inside the casing at any time, both to be able to recirculate fluid and to prevent a fire from occurring inside the casing.

Moreover, the present inerting system allows to provide bigger mass flow entering the casing and lower mass flow coming from the pure inert gas supplying means thanks to the recirculation of fluid located inside the casing. This allows to limit the local build-up of oxygen and/or hydrogen by increasing the flow of inerted gas circulating in the casing. It may also allow to obtain a more turbulent flow, thereby also increasing the homogeneity of the mix of inert gas (nitrogen), oxygen and hydrogen. This homogenisation advantageously prevents punctual points of bigger concentrations that could lead to locally flammable mixture inside the casing.

Furthermore, as there is a higher mass flow entering the casing by the inlet channel, the flow velocity through the casing is bigger and then the arrival time of an inerted atmosphere or fluid flowing through the casing containing risky concentrations of oxygen or hydrogen, will be detected much quicker, as it will arrive faster to the sensing means. Therefore, the present inerting system provides rapid detection of oxygen and hydrogen concentration values that may be indicative of risk to the inside of the casing. For example, if a mixture of oxygen and hydrogen with enough volumetric concentration of these gasesin the atmosphere of the casing happens, there are higher risks of a fire to be triggered. For this reason, the present invention allows to take action before one of the first pre-set thresholds of concentrations of oxygen and concentrations of hydrogen is reached locally.

Additionally, the present inerting system advantageously has the capacity to regulate and variate, as needed, the mass flow coming from the pure inert gas supplying means depending on the information provided by the sensing means to the control means. The fluid inlet and outlet control allows continuous sweeping of the atmosphere inside the casing.

In an embodiment, the fluid recirculation system comprises:
- a recirculation conduct connecting the inside of the casing with the inlet conduct upstream the at least one inlet of the casing;
- a compressor interposed on the recirculation conduct; and
- a recirculation valve located on the recirculation conduct between the compressor and the connection of the recirculation conduct with the inlet conduct, the recirculation valve being configured to regulate the flow of recirculated fluid towards the inlet conduct.

The recirculation conduct of the fluid recirculation system connects the inside of the casing with the inlet conduct in order to mix the recirculated fluid with pure inert gas before being this mixture supplied to the casing through its inlet. The recirculation conduct of the recirculation system connects with the inlet conduct in a section of this inlet conduct between the pure inert gas supplying means and the inlet of the casing, that is, upstream the inlet of the casing.

The recirculation system further comprises a compressor interposed on the recirculation conduct and being configured to compress the fluid coming from the inside of the casing to a pressure lower than the pressure at which the pure inert gas is supplied to the inlet conduct. This compressor ensures pumping of recirculated fluid through the fluid recirculation system. The supplying of the recirculated fluid to the inlet conduct must be at a lower pressure than the inert pure gas supply to prevent the recirculated fluid from flowing backwards in the inlet conduct to the inert pure gas inlet.

Moreover, the fluid recirculation system comprises a recirculation valve for regulating the passage of fluid from the recirculation conduct to the inlet conduct. Specifically, this recirculated valve is connected to the recirculation conduct between the compressor and the connection of the recirculation conduct with the inlet conduct.

The opening of the recirculation valve and/or the flow of fluid recirculated by the compressor depends on the measured hydrogen concentration and/or oxygen concentration.

More particularly, the inerting system further comprises a mixer interposed on the inlet conduct, between the inert fluid regulating means and the at least one inlet of the casing, and connected to the recirculation conduct, so that the mixer is configured to mix pure inert gas from the pure inert gas supplying means and recirculated fluid from the fluid recirculation system.

The mixer is understood as an enclosure interposed on the inlet conduct and in fluid communication with the pure inert gas supplying means, the fluid recirculation system and the inside of the casing. This mixer is where the recirculated fluid is mixed with the pure inert gas before going to the inside of the casing. In an embodiment, the inlet valve regulates the passage of pure inert gas toward the mixer and the recirculation valve regulates the passage of the recirculated fluid towards the mixer.

The present inerting system provides a flushing mode increasing the flow rate of inert pure gas in order to diminish the concentrations of hydrogen and/or oxygen under pre-set flammability limits in a short time and extinguish a fire.

In an embodiment, the inerting system further comprises fire detection means in data communication with the control means and configured to detect fire inside the casing. The control means are further configured to open at maximum flow rate the inlet valve and the outlet valve if the fire detection means detects a fire.

In another embodiment, the control means are further configured to open at maximum flow rate the inlet valve and outlet valve if a high concentration of oxygen or hydrogen is detected by the sensing means, that is, if the concentration of oxygen or hydrogen is above third pre-set thresholds.

With the maximum flow rate opening of the outlet valve flammable gases are advantageously exhausted from inside the casing. In addition, with the maximum flow rate opening of the inlet valve the flammable gases are swept out of the casing and the inside of the casing is quickly inerted again. Moreover, with the maximum flow rate opening of the outlet valve the creation of an overpressure inside the casing is avoided.

Furthermore, with the provision of the present inerting system, replacing the use of any fire extinguishing agent (such as halon) is achieved. In addition, the installation space and weight of the fire extinguishing agent bottle is also spared since it has been replaced by the fluid recirculation system which is anyway required for the inerting of the casing.

The fact of having a first outlet valve to enhance a bigger section of outflow in case of failure, gives an extra margin in terms of safety since the pressure releases quicker from the casing.

Moreover, the reaction time for extinguishing a fire and re-inerting the inside of the casing is shorter with the present inerting system compared to the prior art solutions or with a nominal flow, that is, without opening the inlet valve at its maximum flow rate.

More particularly, the fire detection means may comprise an overpressure sensor for detecting overpressure inside the casing. In case an overpressure inside the casing is detected, the inlet and outlet valves are adjusted to release the generated overpressure.

In an embodiment, the inerting system further comprises pressure measuring means in data communication with the control means and configured to measure the pressure inside the casing, wherein the control means is configured to open the outlet valve above a pre-set flow rate threshold if the pressure measured is over a pre-set pressure threshold. That is, if an overpressure is detected inside the casing, the inlet valve of the casing is regulated to release the generated overpressure and thus achieve a greater sweep of the atmosphere inside the casing. In addition, when an overpressure is detected inside the casing the inlet valve may be also opened above a pre-set flow rate threshold to continue inerting the inside of the casing to the maximum. In this case, the outflow of the outlet valve is greater than the inlet flow of the inlet valve to prevent pressure increase in the casing.

In an embodiment, the sensing means comprises at least a first sensor for measuring the concentration of oxygen and at least a second sensor for measuring the concentration of hydrogen. Advantageously, the sensing means allows measuring the concentration of hydrogen and the concentration of oxygen in order to determine the control means if the fluid contained in the casing can be recirculated.

In an embodiment, the sensing means is located in the casing and/or in the fluid recirculation system and/or in an exhaust conduct connected to the first outlet of the casing. The provision of sensing means in the casing, in the fluid recirculation system and in the exhaust conduct allows to measure the concentration of oxygen and hydrogen at different points in the inerting system where the fluid contained in the casing flows.

In an embodiment, the sensing means is located in the casing and/or in the recirculation conduct of the fluid recirculation system upstream the compressor.

In an embodiment, there is a plurality of sensing means located in the casing with the aim to cover several areas in the casing, thus avoiding localised accumulation of oxygen and hydrogen.

In a second inventive aspect, the present invention provides an aircraft comprising an inerting system according to the first inventive aspect.

In a third inventive aspect, the present invention provides a method for inerting a hydrogen system of an aircraft by an inerting system, the hydrogen system being at least partially housed in a casing, wherein the method comprises:
(a) supplying pure inert gas by a pure inert gas supplying means;
(b) exhausting part of a fluid located inside the casing through a first outlet by a first outlet valve;
(c) monitoring the concentration of oxygen and the concentration of hydrogen inside the casing by sensing means;
(d) recirculating part of the fluid located inside the casing through a fluid recirculation system of the inerting system if the concentration of hydrogen and/or the concentration of oxygen of the fluid to be recirculated are below first pre-set thresholds; and
(e) supplying to the inside of the casing the recirculated fluid mixed with pure inert gas.

The present method is intended for inerting a hydrogen system or a part of the hydrogen system, particularly, a casing enclosing a hydrogen system or a part of the hydrogen system, such as a fuel tank or a fuel cell casing where the fuel is hydrogen, by means of an inerting system. In an embodiment, the inerting system used for inerting the hydrogen system or part of the same is according to the first inventive aspect. The hydrogen system of an aircraft is enclosed in a casing which is inerted in order to keep the hydrogen system inert.

The method comprises a step of supplying a pure inert gas by means of a pure inert gas supplying means, so that the pure inert gas flows to the inside of the casing through at least one inlet of the casing. This step is for setting up an inerting atmosphere inside the casing where the hydrogen system or a part of the hydrogen system is housed. Once the inside of the casing is inerted, the hydrogen system starts its nominal operation. In an embodiment, the pure inert gas is nitrogen.

The method further comprises a step of exhausting part of a fluid located inside the casing through a first outlet of the casing. This first outlet of the casing connects the inside of the casing with the outside of the aircraft. That is, part of the atmosphere created inside the casing is released towards the outside of the aircraft.

The method further comprises a step of recirculating part of the fluid housed inside the casing through a fluid recirculation system of the inerting system. This recirculation is performed only if the concentration of hydrogen and/or the concentration of oxygen inside the casing are below first pre-set thresholds. After this step, the method comprises supplying to the inside of the casing the recirculated fluid mixed with pure inert gas.

Advantageously, the present method allows reuse of pure inert gas already supplied and mixedin the casing with other gases as long as the conditions of the fluid housed in the casing allow it, i.e. as long as the concentration of hydrogen and the concentration of oxygen remain below first pre-set thresholds.

In an embodiment, as long as the sensing means measures a concentration of hydrogen below a first hydrogen pre-set threshold and/or a concentration of oxygen below a first oxygen pre-set threshold, the fluid recirculation system recirculates fluid from the casing.

The sensing means are adapted for measuring the concentration of hydrogen and the concentration of oxygen in order to the control means determine if the fluid contained in the casing can be recirculated.

In another embodiment, the method further comprises a step of monitoring the pressure inside the casing by pressure measuring means in data communication with the control means, wherein if a pressure over a pre-set pressure threshold inside the casing is determined by the control means, the control means opens the first outlet valve for exhausting pressure from the casing until the pressure inside the casing is the same as outside the aircraft. The control means determines if there is an overpressure inside the casing based on the pressure measured by the pressure measuring means. More particularly, when a pressure over a pre-set pressure threshold inside the casing is determined, the control means also opens the inlet valve for supplying pure inert gas to the inside of the casing. Additionally, the first outlet valve and/or the inlet valve are/is opened above a pre-set flow rate threshold when an overpressure inside the casing is detected. According to normal working mode of the inerting system, the pressure inside the casing is slightly higher than outside in order to limit intake of oxygen from air surrounding the casing in case of limited leak of the casing.

In an embodiment, if the concentration of hydrogen inside the casing is above a second pre-set threshold and/or the concentration of oxygen inside the casing is above a second pre-set threshold, the control means opens, above a pre-set flow rate threshold, the first outlet valve for exhausting fluid from the casing and the inlet valve for supplying pure inert gas to the inside of the casing, until the concentration of hydrogen and the concentration of oxygen are below the second pre-set thresholds.

When the concentration of oxygen or concentration of hydrogen or both are above the second pre-set thresholds, the present system is reconfigured to exhaust the fluid housed inside the casing and re-inert the inside of the casing but without recirculation, that is, the recirculation system stops working.

In an embodiment, if the concentration of hydrogen and/or the concentration of oxygen inside the casing are above third pre-set thresholds, or if a fire inside the casing is detected, the control means opens at maximum flow rate the inlet valve and the first outlet valve.

In an embodiment, if the concentration of hydrogen and the concentration of oxygen are below the corresponding first pre-set threshold, the mass flow recirculated passing through a compressor of the fluid recirculation system is increased and the mass flow coming from the pure inert gas supplying means is lowered in the inlet conduct to diminish the concentration of oxygen and hydrogen inside the casing as needed.

In an embodiment, if the concentration of hydrogen or the concentration of oxygen is below the corresponding first pre-set threshold, the mass flow recirculated passing through a compressor of the fluid recirculation system is lowered and the mass flow coming from the pure inert gas supplying means is increased in the inlet conduct to diminish the concentration of oxygen or hydrogen inside the casing as needed.

In an embodiment, the first pre-set thresholds coincide with the second pre-set thresholds, so that there is a single pre-set threshold that sets whether the fluid located in the casing can be recirculated or not. That is, if the oxygen concentration and hydrogen concentration are below this pre-set threshold, recirculation is possible, but if the oxygen concentration and the hydrogen concentration are above the threshold, recirculation is not possible. In addition, if only the concentration of one of both, oxygen or hydrogen, is below the mentioned threshold, recirculation is possible, although less fluid is recirculated as indicated above.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a schematic view of an inerting system according to an embodiment of the present invention.
- Figure 2: This figure shows a schematic view of an inerting system according to another embodiment of the present invention.
- Figure 3: This figure shows a schematic view of an aircraft with an interting system according to the present invention.

### DETAILED DESCRIPTION OF THE INVENTION

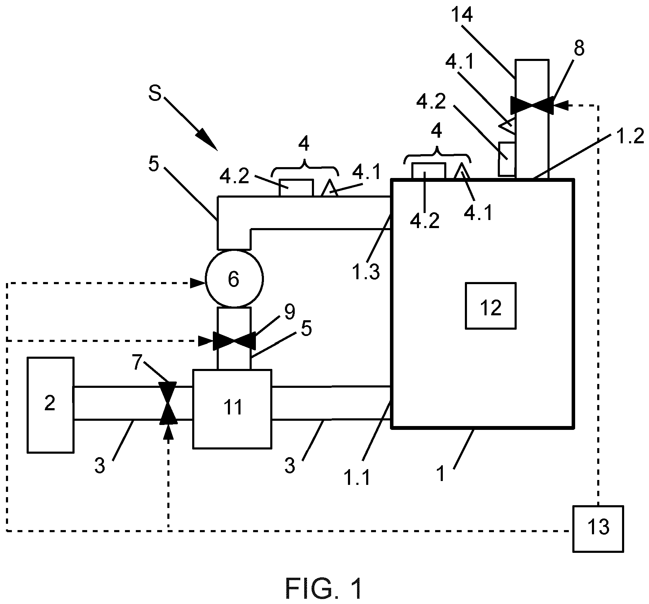

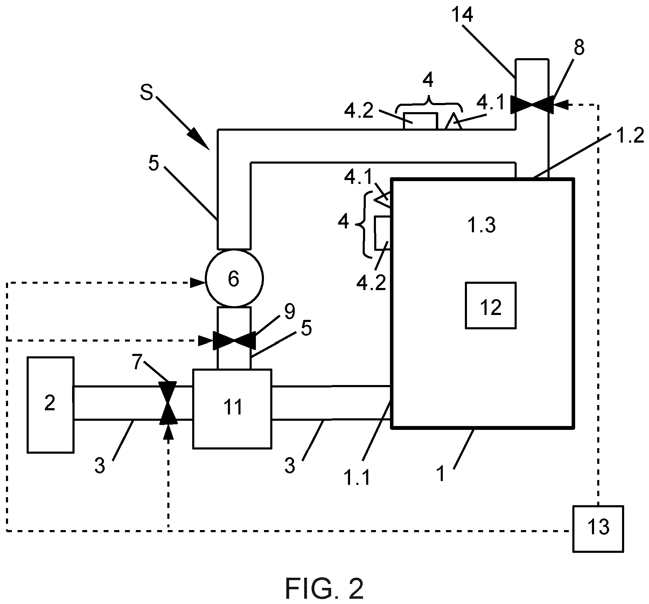

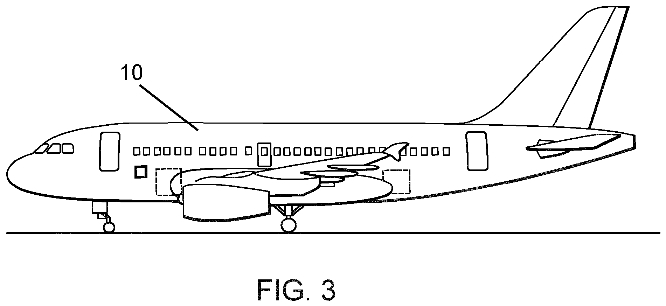

Figures 1 and 2 show an inerting system suitable for inerting a hydrogen fuel cell (12) casing (1) with a fluid recirculation system (S) arranged differently in each of the embodiments of figures 1 and 2. This inerting system is configured to be installed in an aircraft (10). Specifically, figure 3 shows an aircraft (10) suitable for comprising any of the inerting systems according to figures 1 and 2.

There is a casing (1) that houses inside a hydrogen fuel cell (12). This casing (1) comprises one inlet (1.1) and a first outlet (1.2) which allow a fluid flow through the casing (1). The inlet (1.1) is connected to an inlet conduct (3) and the first outlet (1.2) is connected to an exhaust conduct (14). The inlet conduct (3) is in turn connected with pure inert gas supplying means (2) adapted for supplying nitrogen for inerting the inside of the casing (1). On the other hand, the first outlet (1.2) is configured to be connected to the outside of the aircraft (10). The flow inlet of fluid through the inlet (1.1) corresponds to the mass flow entering the casing (1) or mᵢₙ. The flow outlet of fluid through the first outlet (1.2) corresponds to the mass going outside the aircraft (10) and not coming back or mₒᵤₜ.

The inerting system further shows an inlet valve (7) of inert fluid regulating means interposed on the inlet conduct (3) for regulating the flow of nitrogen that is supplied by the pure inert gas supplying means (2) to the inside of the casing (1). That is, the nitrogen is supplied to the inside of the casing (1) through the inlet conduct and its flow is regulated by the inlet valve (7). This flow inlet of nitrogen through to the inlet conduct (3) corresponds to the mass flow coming from the inert pure gas supplying means (2) or mₐ.

The inerting system of these figures 1 and 2 also shows an outlet valve (8) interposed on the exhaust conduct (14) for regulating the outlet flow of fluid coming from the inside of the casing (1) through the first outlet (1.2).

The inerting system also comprises a fluid recirculation system (S) for recirculating part of the fluid housed in the casing (1). This recirculation consists of recirculating the fluid from inside the casing (1) to the inlet conduct (3) and back into the casing (1) together with nitrogen supplied by the pure inert gas supplying means (2). The inerting system further shows a mixer (11) interposed on the inlet conduct (3). Specifically this mixer (11) is arranged between the inlet valve (1.1) and the inlet (1.1) of the casing (1).

This fluid recirculation system (S) comprises a recirculation conduct (5) that connects the inside of the casing (1) with the mixer (11). According to figure 1, the recirculation conduct (5) is arranges between a second outlet (1.3) of the casing (1) and the mixer (11), whereas according to figure 2, the recirculation conduct (5) is arranged between the exhaust conduct (14) and the mixer (11). In both figures 1 and 2, the fluid recirculation system (S) also comprises a compressor (6) interposed on the recirculation conduct (5) and configured to pumping the fluid from the inside of the casing (1) and for regulate the pressure of the recirculated fluid in order to adjust the pressure of this recirculated fluid to be lower than that of the supplied nitrogen. The flow inlet of recirculated flow through the outlet recirculation conduct (5) corresponds to the mass flow recirculated passing through the compressor (6) or m_{c}.

The fluid recirculation system (S) further comprises a recirculation valve (9) arranged between the compressor (6) and the connection of the recirculation conduct (5) with the mixer (11). This regulation valve (9) is provided for regulating the inlet of recirculated fluid towards the recirculation conduct (3).

The inerting system further comprises sensing means (4) for measuring the concentration of oxygen and the concentration of hydrogen inside the casing (1). In particular, the sensing means (4) includes a first sensor (4.1) to measure the concentration of oxygen and a second sensor (4.2) to measure the concentration of hydrogen. According to figure 1, the first sensor (4.1) and the second sensor (4.2) are located on the casing (1), on the recirculation conduct (5) and on the exhaust conduct (14). By contrast, in figure 2, the first sensor (4.1) and the second sensor (4.2) are located on the casing (1) and on the recirculation conduct (5).

The inerting system also comprises control means (13) independently controls the inlet valve (7), the outlet valve (8), the compressor (6) and the recirculation valve (9). Furthermore, the control means (13) are in data communication with the sensing means (4) in order to determine the concentration of oxygen and hydrogen inside the casing (1) and if it is possible to actuate the fluid recirculation system (S). That is, only if the control means (13) determines that the concentration of oxygen and/or the concentration of hydrogen are below first pre-set thresholds respectively, fluid can be recirculated from the inside of the casing (1) towards the inlet conduct (3) to be supplied again to the inside of the casing (1) but mixed with nitrogen.

According to both figures 1 and 2, the inerting system further comprises a fire detection means (not shown) arranged in contact with the casing (1). This fire detection means is also in data communication with the control means (13) so that is this fire detection means detects a fire inside the casing (1), the control means (13) opens at maximum flow rate the inlet valve (7) in order to supply the maximum possible flow rate of nitrogen and also opens at the maximum flow rate the outlet valve (8) in order to allow rapid evacuation of the atmosphere contained in the casing (1).

Furthermore, the inerting system comprises pressure measuring means (not shown) arranged in contact with the casing (1) and configured to measure the pressure inside the casing (1). This pressure measuring means is also in data communication with the control means (13) so that if the control means (13) determines that there is an overpressure inside the casing (1), that is, the pressure inside the casing (1) is over a pre-set pressure threshold, then control means (13) opens the inlet valve (7), or the inlet valve (7) and the outlet valve (8), above a pre-set flow rate threshold in order to reduce the pressure of the fluid housed inside the casing (1).

### Method for inerting a hydrogen system of an aircraft

The present invention further provides a method for inerting a hydrogen system of an aircraft (10) by an inerting system. An example of a method for inerting a fuel cell (12) casing (1) in an aircraft (10) is explained below, wherein the inerting is performed by any of the inerting systems described above regarding figures 1 and 2.

The method comprises a first step (a) of supplying nitrogen to the inside of the casing (1) through the inlet (1.1) by means of pure inert gas supplying means (2). The control means (13) control the operation of the inlet valve (7) for regulating the flow of nitrogen that is supplied through the inlet conduct (3) towards the inside of the casing (1), that is, for regulating mₐ. If it is the first time that an inert atmosphere is to be generated in the casing (1), the inlet valve (7) is opened to its maximum flow rate to allow inerting the casing (1) quickly, and in this case, mₐ is the same as mᵢₙ.

In the inerting process, there must not only be a fluid inlet inside the casing (1) but also a fluid outlet so that there is a continuous flow of fluid through the casing (1). For this reason, the method comprises the step (b) of exhausting part of a fluid housed inside the casing (1) through the first outlet (1.2) of the casing (1). The control means (13) control also the operation of the outlet valve (8) for regulating the outlet flow from the casing (1), that is, for regulating the mₒᵤₜ. The control means (13) controls the operation of both inlet valve (7) and outlet valve (8) so that there is always fluid flowing through the casing (1) so that a balance is maintained within the casing (1) being mₐ equal to mₒᵤₜ.

During the inerting, the method further monitors the concentration of oxygen and the concentration of hydrogen inside the casing (1) according to step (c). This monitoring is performed by means of the sensing means (4) that are measuring continuously these concentrations.

Based on the data measured by the sensing means (4), the control means (13) determines if part of fluid housed in the casing (1) can be recirculated by a fluid recirculation system (S). That is, according to step (d) of the method, if the control means (13) determines that the concentration of oxygen and/or the concentration of hydrogen of the fluid or atmosphere inside the casing (1) are/is below first pre-set thresholds, then the control means (13) controls the recirculation of part of the fluid located inside the casing (1), that is, the recirculation system (S) starts working.

While inerting is carried out, if the control means (13) determines that a fluid recirculation can be performed, the compressor (6) is operated to pump fluid from the inside of the casing (1) along the recirculation conduct (5), that is, to pump m_{c}, and then the recirculation valve (9) is controlled to regulate the passage of recirculated fluid to the mixer (11). During the fluid recirculation, the inlet valve (7) is controlled to reduce mₐ with the aim to compensate for some of the nitrogen that is not supplied by the recirculated fluid. In the case of recirculation, mₐ + m_{c} is equal to mᵢₙ.

In an embodiment, the oxygen first pre-set threshold is lower than 4% according to required safety policy limits regarding fire extinguishing, and the hydrogen first pre-set threshold is lower than 4% according to safety policy. The concentration limits that may create a flammability risk inside the casing is 4% for both oxygen and hydrogen concentrations.

In this inerting method, there is also a step of monitoring the pressure insinde the casing (1) by pressure measuring means (not shown) which are in data communication with the control means (13). If the control means (13) determines that the pressure inside the casing (1) is over a pre-set pressure threshold based on the data (measured pressure) provided by the pressure measuring means, the first outlet valve (8) is opened above a pre-set flow rate threshold for exhausting pressure from the casing (1). At the same time the inlet valve (7) may be also opened above the pre-set flow rate threshold for supplying nitrogen to the inside of the casing (1) until the pressure in the casing (1) achieves the same pressure as outside the aircraft (10). The pre-set pressure threshold and the pre-set flow rate threshold may vary depending on the configuration of the casing and the hydrogen system.

Moreover, if the control means (13) determines that the concentration of hydrogen and/or the concentration of oxygen inside the casing (1) is/are above a second pre-set thresholds, both inlet valve (7) and first outlet valve (8) are opened above a pre-set flow rate threshold to rapidly sweep the fluid contained in the casing (1) until it reaches concentrations of hydrogen and oxygen below the second pre-set thresholds. In an example, the second pre-set threshold is 0,75% volumetric concentration of hydrogen and 2% volumetric concentration of oxygen.

Furthermore, the method comprises a step of extinguishing a fire inside the casing (1) if the fire detection means of the inerting system detects that a fire is generated inside the casing (1). For example, for a fire to start there has to be an air supply leak inside the casing (1), an overpressure inside the casing (1) and also a small leakage of hydrogen. All this triggers the start of a fire locally consuming part of the oxygen located inside the casing (1). Although at the moment a fire starts the hydrogen fuel cell (12) is shut down, there is always residual hydrogen in the pipes of the hydrogen fuel cell (12).

To extinguish the fire in the casing (1), both the inlet valve (7) and the first outlet valve (8) are opened at maximum flow rate to evacuate the affected atmosphere inside the casing (1) as soon as possible and generate a new inerted atmosphere. Specifically, firstly the first outlet valve (8) is opened for flushing the oxygen and/or hydrogen but the pressure in the casing (1) increases due to the fire. Then, the inlet valve (7) is completely opened to suffocate the fire with the objective to obtain a lower concentration of oxygen and hydrogen inside the casing (1). In an embodiment, when the inerting system is operated to extinguish a fire inside the casing (1) as already described above, the concentration of oxygen is diminished below a 4%. Thus, when the volumetric concentration of oxygen is under 4%, no fire can be stabilize inside the casing (1). In an embodiment, the flammability limits are 4% for the hydrogen concentration and 4% for the oxygen concentration according to required safety policy limits regarding fire extinguishing.

The mass flow of nitrogen can be increased as needed and this mass flow of nitrogen is related to the free volume of the casing and the time required to inert again the casing in case of failure or fire inside the casing.

## Claims

1. An inerting system for an aircraft (10), the inerting system comprising:
- a casing (1) at least partially housing a hydrogen system, the casing (1) comprising at least one inlet (1.1) and a first outlet (1.2), the first outlet (1.2) being configured to connect the inside of the casing (1) with the outside of the aircraft (10);
- pure inert gas supplying means (2) configured to supply pure inert gas to the inside of the casing (1) through an inlet conduct (3) connected to the inert gas supplying means (2) and to the at least one inlet (1.1) of the casing (1);
- sensing means (4) configured to measure the concentration of oxygen and the concentration of hydrogen of a fluid located inside the casing (1);
- inert fluid regulating means configured to regulate the passage of a flow of pure inert gas inside of the casing (1) through the inlet conduct (3);
- an outlet valve (8) configured to regulate an outlet flow of fluid located inside the casing (1) through the first outlet (1.2);
- a fluid recirculation system (S) configured to recirculate part of the fluid located inside the casing (1) to the inlet conduct (3) for supplying the recirculated fluid mixed with the pure inert gas to the inside of the casing (1); and
- control means (13) in data communication with the sensing means (4) and configured to independently control at least the outlet valve (8) and the fluid recirculation system (S) based on the concentration of oxygen and the concentration of hydrogen inside the casing (1);
wherein the control means (13) is configured to actuate the recirculation in the fluid recirculation system (S) only when the concentration of oxygen and/or the concentration of hydrogen of the fluid located inside the casing (1) are below first pre-set thresholds respectively.

2. The inerting system according to the previous claim, wherein the fluid recirculation system (S) comprises:
• a recirculation conduct (5) connecting the inside of the casing (1) with the inlet conduct (3) upstream the at least one inlet (1.1) of the casing (1);
• a compressor (6) interposed on the recirculation conduct (5); and
• a recirculation valve (9) located on the recirculation conduct (5) between the compressor (6) and the connection of the recirculation conduct (5) with the inlet conduct (3), the recirculation valve (9) being configured to regulate the flow of recirculated fluid towards the inlet conduct (3).

3. The inerting system according to the previous claim, further comprising a mixer (11) interposed on the inlet conduct (3), between the inert fluid regulating means and the at least one inlet (1.1) of the casing (1), and connected to the recirculation conduct (5), so that the mixer (11) is configured to mix pure inert gas from the pure inert gas supplying means (2) and recirculated fluid from the fluid recirculation system (S).

4. The inerting system according to any one of the previous claims, wherein the inert fluid regulating means comprise an inlet valve (7) and the control means (13) are configured to further control the inlet valve (7).

5. The inerting system according to the previous claim, further comprising fire detection means in data communication with the control means (13) and configured to detect fire inside the casing (1), wherein the control means (13) are further configured to open at maximum flow rate the inlet valve (7) and the outlet valve (8) if the fire detection means detects a fire.

6. The inerting system according to any one of claims 4 to 5, further comprising pressure measuring means in data communication with the control means (13) and configured to measure the pressure inside the casing (1), wherein the control means (13) is configured to open the outlet valve (8) above a pre-set flow rate threshold if the measured pressure is over a pre-set pressure threshold.

7. The inerting system according to any one of the previous claims, wherein the sensing means (4) comprises at least a first sensor (4.1) for measuring the concentration of oxygen and at least a second sensor (4.2) for measuring the concentration of hydrogen.

8. The inerting system according to any one of the previous claims, wherein the sensing means (4) is located in the casing (1) and/or in the fluid recirculation system (S) and/or in an exhaust conduct (14) connected to the first outlet (1.2) of the casing (1).

9. The inerting system according to any one of the previous claims, wherein the pure inert gas is nitrogen.

10. The inerting system according to any one of the previous claims, wherein the hydrogen system is a fuel tank or a fuel cell (12).

11. Aircraft (10) comprising an inerting system according to any one of the previous claims.

12. Method for inerting a hydrogen system of an aircraft (10) by an inerting system, the hydrogen system being at least partially housed in a casing (1), wherein the method comprises:
(a) supplying pure inert gas by a pure inert gas supplying means (2);
(b) exhausting part of a fluid located inside the casing (1) through a first outlet (1.2) by a first outlet valve (8);
(c) monitoring the concentration of oxygen and the concentration of hydrogen inside the casing (1) by sensing means (4);
(d) recirculating part of the fluid located inside the casing (1) through a fluid recirculation system (S) of the inerting system if the concentration of hydrogen and/or the concentration of oxygen of the fluid to be recirculated are below first pre-set thresholds; and
(e) supplying to the inside of the casing (1) the recirculated fluid mixed with pure inert gas.

13. Method according to the previous claim, wherein as long as the sensing means (4) measures a concentration of hydrogen below a first hydrogen pre-set threshold and/or a concentration of oxygen below a first oxygen pre-set threshold, the fluid recirculation system (S) recirculates fluid from the casing (1).

14. Method according to claim 12, further comprising a step of monitoring the pressure inside the casing (1) by pressure measuring means in data communication with the control means (13), wherein if a pressure over a pre-set pressure threshold inside the casing (1) is determined by the control means (13), the control means (13) opens the first outlet valve (8) for exhausting pressure from the casing (1) until the pressure inside the casing (1) is the same as outside the aircraft (10).

15. Method according to claim 12 or 14, wherein if the concentration of hydrogen inside the casing (1) is above a second pre-set threshold and/or the concentration of oxygen inside the casing (1) is above a second pre-set threshold, the control means (13) opens, above a pre-set flow rate threshold, the first outlet valve (8) for exhausting fluid from the casing (1) and the inlet valve (7) for supplying pure inert gas to the inside of the casing (1), until the concentration of hydrogen and the concentration of oxygen are below the second pre-set thresholds.

## Patentansprüche

1. Inertisierungssystem für ein Luftfahrzeug (10), wobei das Inertisierungssystem Folgendes umfasst:
- ein Gehäuse (1), in dem mindestens teilweise ein Wasserstoffsystem untergebracht ist, wobei das Gehäuse (1) mindestens einen Einlass (1.1) und einen ersten Auslass (1.2) umfasst, wobei der erste Auslass (1.2) dazu ausgelegt ist, das Innere des Gehäuses (1) mit der Außenseite des Luftfahrzeugs (10) zu verbinden;
- Reininertgaszuführmittel (2), das/die dazu ausgelegt ist/sind, dem Inneren des Gehäuses (1) Reininertgas durch eine Einlassleitung (3) zuzuführen, die mit dem Inertgaszuführmittel (2) und dem mindestens einen Einlass (1.1) des Gehäuses (1) verbunden ist;
- Abfühlmittel (4), das/die dazu ausgelegt ist/sind, die Sauerstoffkonzentration und die Wasserstoffkonzentration eines Fluids zu messen, das sich innerhalb des Gehäuses (1) befindet;
- Inertfluidreguliermittel, das/die dazu ausgelegt ist/sind, den Durchgang eines Flusses von Reininertgas innerhalb des Gehäuses (1) durch die Einlassleitung (3) zu regulieren;
- ein Auslassventil (8), das dazu ausgelegt ist, einen Auslassfluss von Fluid, das sich innerhalb des Gehäuses (1) befindet, durch den ersten Auslass (1.2) hindurch zu regulieren;
- ein Fluidrezirkulationssystem (S), das ausgelegt ist, um einen Teil des Fluids, das sich innerhalb des Gehäuses (1) befindet, zu der Einlassleitung (3) zu rezirkulieren, um das mit dem Reininertgas gemischte rezirkulierte Fluid dem Inneren des Gehäuses (1) zuzuführen; und
- Steuermittel (13) in Datenkommunikation mit dem Abfühlmittel (4), und das/die dazu ausgelegt ist/sind, mindestens das Auslassventil (8) und das Fluidrezirkulationssystem (S) unabhängig basierend auf der Sauerstoffkonzentration und der Wasserstoffkonzentration innerhalb des Gehäuses (1) zu steuern;
wobei das Steuermittel (13) dazu ausgelegt ist, die Rezirkulation in dem Fluidrezirkulationssystem (S) nur dann zu betätigen, wenn die Sauerstoffkonzentration und/oder die Wasserstoffkonzentration des Fluids, das sich innerhalb des Gehäuses (1) befindet, jeweils unter ersten vorgegebenen Schwellen liegt/liegen.

2. Inertisierungssystem nach dem vorhergehenden Anspruch, wobei das Fluidrezirkulationssystem (S) Folgendes umfasst:
• eine Rezirkulationsleitung (5), die das Innere des Gehäuses (1) mit der Einlassleitung (3) stromaufwärts des mindestens einen Einlasses (1.1) des Gehäuses (1) verbindet;
• einen Kompressor (6), der an der Rezirkulationsleitung (5) zwischengeschaltet ist; und
• ein Rezirkulationsventil (9), das sich an der Rezirkulationsleitung (5) zwischen dem Kompressor (6) und der Verbindung der Rezirkulationsleitung (5) mit der Einlassleitung (3) befindet, wobei das Rezirkulationsventil (9) dazu ausgelegt ist, den Fluss von rezirkuliertem Fluid in Richtung der Einlassleitung (3) zu regulieren.

3. Inertisierungssystem nach dem vorhergehenden Anspruch, das ferner einen Mischer (11) umfasst, der an der Einlassleitung (3) zwischen dem Inertfluidreguliermittel und dem mindestens einen Einlass (1.1) des Gehäuses (1) zwischengeschaltet und mit der Rezirkulationsleitung (5) verbunden ist, so dass der Mischer (11) ausgelegt ist, Reininertgas aus dem Reininertgaszuführmittel (2) und rezirkuliertes Fluid aus dem Fluidrezirkulationssystem (S) zu mischen.

4. Inertisierungssystem nach einem der vorhergehenden Ansprüche, wobei die Inertfluidreguliermittel ein Einlassventil (7) umfassen, und die Steuermittel (13) dazu ausgelegt ist, das Einlassventil (7) weiter zu steuern.

5. Inertisierungssystem nach dem vorhergehenden Anspruch, das ferner Branddetektionsmittel in Datenkommunikation mit den Steuermitteln (13) umfasst, und das/die dazu ausgelegt ist/sind, Feuer innerhalb des Gehäuses (1) zu detektieren, wobei die Steuermittel (13) ferner dazu ausgelegt sind, das Einlassventil (7) und das Auslassventil (8) auf maximale Durchflussrate zu öffnen, falls das Branddetektionsmittel ein Feuer detektiert.

6. Inertisierungssystem nach einem der Ansprüche 4 bis 5, das ferner Druckmessmittel in Datenkommunikation mit den Steuermitteln (13) umfasst, und das/die dazu ausgelegt ist/sind, den Druck innerhalb des Gehäuses (1) zu messen, wobei das Steuermittel (13) dazu ausgelegt ist, das Auslassventil (8) oberhalb einer vorgegebenen Durchflussratenschwelle zu öffnen, falls der gemessene Druck über einer vorgegebenen Druckschwelle liegt.

7. Inertisierungssystem nach einem der vorhergehenden Ansprüche, wobei das Abfühlmittel (4) mindestens einen ersten Sensor (4.1) zum Messen der Sauerstoffkonzentration und mindestens einen zweiten Sensor (4.2) zum Messen der Wasserstoffkonzentration umfasst.

8. Inertisierungssystem nach einem der vorhergehenden Ansprüche, wobei sich das Abfühlmittel (4) in dem Gehäuse (1) und/oder in dem Fluidrezirkulationssystem (S) und/oder in einer Abführleitung (14) befindet, die mit dem ersten Auslass (1.2) des Gehäuses (1) verbunden ist.

9. Inertisierungssystem nach einem der vorhergehenden Ansprüche, wobei das Reininertgas Stickstoff ist.

10. Inertisierungssystem nach einem der vorhergehenden Ansprüche, wobei das Wasserstoffsystem ein Kraftstofftank oder eine Brennstoffzelle (12) ist.

11. Luftfahrzeug (10), das ein Inertisierungssystem nach einem der vorherigen Ansprüche umfasst.

12. Verfahren zum Inertisieren eines Wasserstoffsystems eines Luftfahrzeugs (10) durch ein Inertisierungssystem, wobei das Wasserstoffsystem mindestens teilweise in einem Gehäuse (1) untergebracht ist, wobei das Verfahren Folgendes umfasst:
a) Zuführen von Reininertgas durch ein Reininertgaszuführmittel (2);
b) Abführen eines Teils eines Fluids, das sich innerhalb des Gehäuses (1) befindet, durch einen ersten Auslass (1.2) hindurch durch ein erstes Auslassventil (8);
c) Überwachen der Sauerstoffkonzentration und der Wasserstoffkonzentration innerhalb des Gehäuses (1) durch Abfühlmittel (4);
(d) Rezirkulieren eines Teils des Fluids, das sich innerhalb des Gehäuses (1) befindet, durch ein Fluidrezirkulationssystem (S) des Inertisierungssystems hindurch, falls die Wasserstoffkonzentration und/oder die Sauerstoffkonzentration des zu rezirkulierenden Fluids unter ersten vorgegebenen Schwellen liegt/liegen; und
e) Zuführen des mit Reininertgas gemischten rezirkulierten Fluids in das Innere des Gehäuses (1).

13. Verfahren nach dem vorhergehenden Anspruch, wobei das Fluidrezirkulationssystem (S), solange das Abfühlmittel (4) eine Wasserstoffkonzentration unterhalb einer ersten Wasserstoffvorgabeschwelle und/oder eine Sauerstoffkonzentration unterhalb einer ersten Sauerstoffvorgabeschwelle misst, Fluid aus dem Gehäuse (1) rezirkuliert.

14. Verfahren nach Anspruch 12, ferner umfassend einen Schritt des Überwachens des Drucks innerhalb des Gehäuses (1) durch Druckmessmittel in Datenkommunikation mit den Steuermitteln (13), wobei das Steuermittel (13), falls ein Druck über einer vorgegebenen Druckschwelle innerhalb des Gehäuses (1) durch die Steuermittel (13) bestimmt wird, das erste Auslassventil (8) zum Abführen des Drucks aus dem Gehäuse (1) öffnet, bis der Druck innerhalb des Gehäuses (1) der gleiche wie außerhalb des Luftfahrzeugs (10) ist.

15. Verfahren nach Anspruch 12 oder 14, wobei das Steuermittel (13), falls die Wasserstoffkonzentration innerhalb des Gehäuses (1) über einer zweiten vorgegebenen Schwelle liegt und/oder die Sauerstoffkonzentration innerhalb des Gehäuses (1) über einer zweiten vorgegebenen Schwelle liegt, oberhalb einer vorgegebenen Durchflussratenschwelle das erste Auslassventil (8) zum Abführen von Fluid aus dem Gehäuse (1) und das Einlassventil (7) zum Zuführen von Reininertgas zu dem Inneren des Gehäuses (1) öffnet, bis die Wasserstoffkonzentration und die Sauerstoffkonzentration unter den zweiten vorgegebenen Schwellen liegen.

## Revendications

1. Système d'inertage pour un aéronef (10), le système d'inertage comprenant :
- un caisson (1) accueillant au moins partiellement un système à l'hydrogène, le caisson (1) comprenant au moins une entrée (1.1) et une première sortie (1.2), la première sortie (1.2) étant conçue pour raccorder l'intérieur du caisson (1) avec l'extérieur de l'aéronef (10) ;
- des moyens d'alimentation en gaz inerte pur (2) conçus pour alimenter en gaz inerte pur l'intérieur du caisson (1) par un conduit d'entrée (3) raccordé aux moyens d'alimentation en gaz inerte (2) et à l'au moins une entrée (1.1) du caisson (1) ;
- des moyens de détection (4) conçus pour mesurer la concentration d'oxygène et la concentration d'hydrogène dans un fluide situé à l'intérieur du caisson (1) ;
- des moyens de régulation de fluide inerte conçus pour réguler le passage d'un flux de gaz inerte pur à l'intérieur du caisson (1) par le conduit d'entrée (3) ;
- une vanne de sortie (8) conçue pour réguler un flux de sortie d'un fluide situé à l'intérieur du caisson (1) par la première sortie (1.2) ;
- un système de recirculation de fluide (S) conçu pour remettre en circulation une partie du fluide situé à l'intérieur du caisson (1) jusqu'au conduit d'entrée (3) afin d'alimenter l'intérieur du caisson (1) avec le fluide remis en circulation mélangé avec le gaz inerte pur ; et
- des moyens de commande (13) en communication de données avec les moyens de détection (4) et conçus pour commander indépendamment au moins la vanne de sortie (8) et le système de recirculation de fluide (S) en fonction de la concentration d'oxygène et de la concentration d'hydrogène à l'intérieur du caisson (1) ;
dans lequel les moyens de commande (13) sont conçus pour activer la remise en circulation dans le système de recirculation de fluide (S) uniquement lorsque la concentration d'oxygène et/ou la concentration d'hydrogène dans le fluide situé à l'intérieur du caisson (1) sont respectivement inférieures à de premiers seuils prédéfinis.

2. Système d'inertage selon la revendication précédente, dans lequel le système de recirculation de fluide (S) comprend :
• un conduit de recirculation (5) raccordant l'intérieur du caisson (1) au conduit d'entrée (3) en amont de l'au moins une entrée (1.1) du caisson (1) ;
• un compresseur (6) inséré sur le conduit de recirculation (5) ; et
• une vanne de recirculation (9) située sur le conduit de recirculation (5) entre le compresseur (6) et le raccord entre le conduit de recirculation (5) et le conduit d'entrée (3), la vanne de recirculation (9) étant conçue pour réguler le flux de fluide remis en circulation vers le conduit d'entrée (3).

3. Système d'inertage selon la revendication précédente, comprenant en outre un mélangeur (11) inséré sur le conduit d'entrée (3), entre les moyens de régulation de fluide inerte et l'au moins une entrée (1.1) du caisson (1), et raccordé au conduit de recirculation (5), de sorte que le mélangeur (11) est conçu pour mélanger le gaz inerte pur provenant des moyens d'alimentation en gaz inerte pur (2) et le fluide remis en circulation provenant du système de recirculation de fluide (S).

4. Système d'inertage selon l'une quelconque des revendications précédentes, dans lequel les moyens de régulation de fluide inerte comprennent une vanne d'entrée (7) et les moyens de commande (13) sont conçus pour commander également la vanne d'entrée (7).

5. Système d'inertage selon la revendication précédente, comprenant en outre des moyens de détection d'incendie en communication de données avec les moyens de commande (13) et conçus pour détecter un incendie à l'intérieur du caisson (1), les moyens de commande (13) étant en outre conçus pour ouvrir à un débit maximal la vanne d'entrée (7) et la vanne de sortie (8) si les moyens de détection d'incendie détectent un incendie.

6. Système d'inertage selon l'une quelconque des revendications 4 à 5, comprenant en outre des moyens de mesure de pression en communication de données avec les moyens de commande (13) et conçus pour mesurer la pression à l'intérieur du caisson (1), les moyens de commande (13) étant conçus pour ouvrir la vanne de sortie (8) au-dessus d'un seuil de débit prédéfini si la pression mesurée est supérieure à un seuil de pression prédéfini.

7. Système d'inertage selon l'une quelconque des revendications précédentes, dans lequel les moyens de détection (4) comprennent au moins un premier capteur (4.1) servant à mesurer la concentration d'oxygène et au moins un deuxième capteur (4.2) servant à mesurer la concentration d'hydrogène.

8. Système d'inertage selon l'une quelconque des revendications précédentes, dans lequel les moyens de détection (4) sont situés dans le caisson (1) et/ou dans le système de recirculation de fluide (S) et/ou dans un conduit d'évacuation (14) raccordé à la première sortie (1.2) du caisson (1).

9. Système d'inertage selon l'une quelconque des revendications précédentes, dans lequel le gaz inerte pur est l'azote.

10. Système d'inertage selon l'une quelconque des revendications précédentes, dans lequel le système à l'hydrogène est un réservoir de carburant ou une pile à combustible (12).

11. Aéronef (10) comprenant un système d'inertage selon l'une quelconque des revendications précédentes.

12. Procédé d'inertage d'un système à l'hydrogène d'un aéronef (10) par un système d'inertage, le système à l'hydrogène étant au moins partiellement accueilli dans un caisson (1), le procédé comprenant :
a) une alimentation en gaz inerte pur par des moyens d'alimentation en gaz inerte pur (2) ;
(b) l'évacuation d'une partie d'un fluide situé à l'intérieur du caisson (1) par une première sortie (1.2) par une première vanne de sortie (8) ;
c) la surveillance de la concentration d'oxygène et de la concentration d'hydrogène à l'intérieur du caisson (1) par des moyens de détection (4) ;
(d) la remise en circulation d'une partie du fluide situé à l'intérieur du caisson (1) par un système de recirculation de fluide (S) du système d'inertage si la concentration d'hydrogène et/ou la concentration d'oxygène dans le fluide à remettre en circulation sont inférieures à de premiers seuils prédéfinis ; et
(e) l'alimentation de l'intérieur du caisson (1) avec le fluide remis en circulation mélangé à du gaz inerte pur.

13. Procédé selon la revendication précédente dans lequel, tant que les moyens de détection (4) mesurent une concentration d'hydrogène inférieure à un premier seuil d'hydrogène prédéfini et/ou une concentration d'oxygène inférieure à un premier seuil d'oxygène prédéfini, le système de recirculation de fluide (S) remet en circulation le fluide provenant du caisson (1).

14. Procédé selon la revendication 12, comprenant en outre une étape de surveillance de la pression à l'intérieur du caisson (1) par des moyens de mesure de pression en communication de données avec les moyens de commande (13), dans lequel, si une pression supérieure à un seuil de pression prédéfini à l'intérieur du caisson (1) est déterminée par les moyens de commande (13), les moyens de commande (13) ouvrent la première vanne de sortie (8) afin d'évacuer la pression du caisson (1) jusqu'à ce que la pression à l'intérieur du caisson (1) soit la même qu'à l'extérieur de l'aéronef (10).

15. Procédé selon la revendication 12 ou 14 dans lequel, si la concentration d'hydrogène à l'intérieur du caisson (1) est supérieure à un deuxième seuil prédéfini et/ou la concentration d'oxygène à l'intérieur du caisson (1) est supérieure à un deuxième seuil prédéfini, les moyens de commande (13) ouvrent, au-dessus d'un seuil de débit prédéfini, la première vanne de sortie (8) pour l'évacuation du fluide u caisson (1) et la vanne d'entrée (7) pour l'alimentation en gaz inerte pur de l'intérieur du caisson (1), jusqu'à ce que la concentration d'hydrogène et la concentration d'oxygène soient inférieures aux deuxièmes seuils prédéfinis.
